(19) Europäisches Patentamt
European Patent Office
Office européen des brevets

(11) **EP 2 451 214 B1**

(12) **EUROPEAN PATENT SPECIFICATION**

(45) Date of publication and mention
of the grant of the patent:
**28.11.2012 Bulletin 2012/48**

(51) Int Cl.:
**H04W 36/16** *(2009.01)*    *H04W 28/08* *(2009.01)*

(21) Application number: **10290594.0**

(22) Date of filing: **05.11.2010**

(54) **Method for deciding on a potential load balancing operation in a wireless network and corresponding network element**

Verfahren zum Entscheiden über eine mögliche Lastausgleichsoperation in einem drahtlosen Netzwerk und entsprechendes Netzwerkelement

Procédé pour décider d'une potentielle opération d'équilibre de flux dans un réseau sans fil et élément de réseau correspondant

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.05.2012 Bulletin 2012/19**

(73) Proprietor: **Alcatel Lucent**
**75007 Paris (FR)**

(72) Inventors:
• **Gerlach, Christian Georg, Dr.**
**71254 Ditzingen (DE)**
• **Stanze, Oliver**
**70499 Stuttgart (DE)**
• **Cesar, Bozo**
**70439 Stuttgart (DE)**

(74) Representative: **Wetzel, Emmanuelle**
**Alcatel-Lucent Deutschland AG**
**Lorenzstr. 10**
**70435 Stuttgart (DE)**

(56) References cited:
**EP-A1- 1 895 801        EP-A1- 2 073 579**
**US-A1- 2009 310 568     US-A1- 2010 173 637**
**US-A1- 2010 238 884**

• **NOKIA SIEMENS NETWORKS: "On TDM elCIC Coordination for Macro+Pico Cases", 3GPP DRAFT; R3-102817 PICOMACRO_ TDMEICICCOORD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Xi'an; 20101011, 2 October 2010 (2010-10-02), XP050453624, [retrieved on 2010-10-02]**

## Description

### Field of the invention

The present invention refers to a method for deciding on a potential load balancing operation in a wireless network comprising a first base station having a first cell and at least one second base station having a second cell, the first cell and the second cell at least partially overlapping each other. Furthermore, the present invention refers to a network element of a wireless network, such as a macro base station or a pico base station, being arranged for executing such a method.

### Background

Hierarchical cellular networks are known in the art. Hierarchical networks typically have comparatively large macro cells. So-called pico cells which are smaller than the macro cells are embedded at least partially within a macro cell. A mobile terminal that is registered with a macro cell and located within a coverage area of a pico cell embedded within the macro cell may perform a handover from the macro cell to the pico cell, switching data traffic originally transferred between the macro base station and the terminal to the pico base station.

In many cases, the pico cell improves the overall performance of the cellular network because the macro base station may hand over at least some terminals located within the pico cell to the pico base station so that these terminals perceive a better quality of service and the macro base station has more radio resources available to serve the terminals that remain registered with a macro base station.

In particular, if the macro base station and the pico base station use the same radio resources, the size of the pico cell depends on the transmit power used by the macro base station and the one used by the pico base station for transmitting on these radio resources or a portion thereof. For instance, if the transmit power of the pico base station can not be increased or if the macro transmit power is comparatively high then interference between the macro base station and the pico base station results in a comparatively low size of the pico cell. A low transmit power results in a comparatively large pico cell because the interference is comparatively low.

The published patent application US 2010/0238884 A1 discloses a method for wireless communication. According to this method, overall metrics for a plurality of possible actions related to association and resource partitioning are obtained and the action with the best overall metric is selected.

The published patent application EP 2 073 579 A1 discloses a method and systems for handling handover processes in cellular communication networks.

3GPP R3-102 817 "On TDM eICIC coordination for Macro+Pico Coses", discloses a basic principle of TDM eICIC for macro + pico communication scenarios.

### Summary

The object of the present invention is to provide a method for deciding on a potential load balancing operation that allows for coordinating the operation of the macro base station and at least one pico base station such that an overall performance of the macro cell and the pico cell embedded in that macro cell is improved. This object is solved by a method according to claim 1 and a network element according to claim 13.

According to an example of the present invention, a method for deciding on whether to perform a load balancing operation in a wireless network comprising a first base station having a first cell and at least one second base station having a second cell, the first cell and the second cell at least partially overlapping each other, is provided. This method comprises evaluating an impact of a potential load balancing operation to an overall performance metric, said metric characterizing the performance of the first cell and the at least one second cell, and performing the load balancing operation if said evaluating indicates that the potential load balancing operation would improve the performance according to the performance metric. The performance metric may characterize or depend on an overall throughput of the first cell and the second cell and/or a fairness of resource assignment to terminals registered with the first base station or the second base station. However, in certain embodiments, the performance metric may depend on different characteristics of the wireless network.

By evaluating the load balancing operation by means of the performance metric before performing the load balancing operation the method prognosticates whether the load balancing operation most probably would improve the performance according to the performance metric or not. Thus, inappropriate load balancing operations can be avoided and the overall performance in terms of throughput, fairness or the like is improved.

Preferably, the network is a hierarchical cellular network, the first cell being a macro cell and the second cell being a pico cell, a coverage area of the pico cell being smaller than a coverage area of the macro cell, and wherein the first base station is a macro base station controlling the macro cell and the second base station is a pico base station controlling the pico cell. The macro cell and the pico cell overlap each other at least partially, i.e., the pico cell may be located completely within the macro cell or the pico cell may be located at a cell border of the macro cell so that only a part of the pico cell is located within the macro cell.

In an example, said evaluating comprises calculating a current value of the performance metric related to a current operating station of the first cell and the at least one second cell and calculating a predicted value of the performance metric related to an operating state of the first cell and the at least one second cell that would appear if the load balancing operation would be performed. The current value and the predicted value may be compared with each other. The method may decide depending on this comparison on whether to perform the load balancing operation.

In another example, the values of performance metric are determined based on a radio resource management model and the metric is preferably a minimum terminal bitrate.

The overall performance metric characterizes the performance of the first cell including the at least one second cell that at least partially overlaps that first cell and therefore relates to multiple cells and the corresponding base stations. In an example, the method comprises determining at least one cell specific value of a cell specific performance metric, said cell specific value characterizing the performance of the first cell or the second cell and determining the current value and/or the predicted value depending on the at least one cell specific value.

Deciding on the load balancing operation is related to the first base station and the at least one second base station. Therefore, it is desirable to coordinate decisions on whether to perform the load balancing operation among the first base station and the concerned second base stations. In an example this coordinating is carried out by exchanging with network elements, preferably with the first base station and/or the second base station, the cell specific values, the values of the overall performance metric, and/or an indication for indicating whether said evaluating indicates that the potential load balancing operation would improve the performance according to the performance metric.

In an example, performing the load balancing operation comprises triggering a handover of a terminal from the first cell to the second cell or from the second cell to the first cell. According to this example, a potential handover is evaluated using the performance metric. If this evaluation shows that a handover would improve the combined performance of the first cell and the at least one second cell then the handover is performed. Otherwise, the handover is postponed or completely cancelled.

Preferably, the method comprises transmitting to a handover target base station at least one parameter characterizing radio conditions related to the terminal, preferably a pathloss between the terminal and at least one base station.

In an example, performing the load balancing operation comprises limiting a transmit power of a signal transmitted by the first base station over a portion of radio resources of the first cell and the second cell. Limiting the transmit power typically augments the size of the second cell so that more terminals residing within the first cell may register with the second cell. However, increasing the size of the second cell does not always improve the overall performance. For example, if there is already a large number of terminals registered with the second cell and if there is a comparatively high load in the second cell then increasing the size of the second cell making even more terminals register with that second cell will not improve the overall performance because a large number of terminals share the second cell whereas the first cell is used only little. However, if the second cell is almost empty then increasing the size of the second cell improves the overall performance because the second cell can reach more terminals that may leave the first cell and register with the second cell. When limiting the transmit power depending on the evaluating of the performance metric allows for semi-statically increase of the size of the second cell if appropriate.

Preferably, the portion of the radio resources corresponds to a time interval, preferably a frame or a subframe of a framing structure of the wireless network, or a portion of the frame or the subframe. In particular, the first base station may limit the transmit power, preferably completely suppress signal transmissions, within at least one portion of the frame or the subframe. In this case in a time synchronized system, the first base station transmits only in that part of the frame or the subframe that is used for transmission of reference symbols (e.g. pilots) for mobility measurements, whereas the remaining parts of the frame or the subframe are not used by the first base station at all. This way the suppression by the first base station also eliminates interference on the portion of the subframe that is used for the control channel. When applying the method in the Long Term Evolution (LTE) system, the first base station may suppress transmission in all portions of a subframe except these portions of the subframe that are used for transmitting reference symbols (pilots). These subframes are also referred to almost blank subframes (ABS).

In an example, the method comprises reverting said limiting the transmit power. For example, if a large size of the second cell is not required anymore then the first base station may stop limiting the transmit power and use the corresponding portion of the radio resources for communicating with a terminal registered with the first base station.

Preferably, the method comprises evaluating an impact of reverting limiting the transmit power to the overall performance metric and reverting said limiting if said evaluating indicates that said reverting would improve the performance according to the performance metric.

In order to evaluate the impact of the performance metric, the method may comprise calculating the current value of the performance metric relating to the current operating state, calculating the predicted value of the performance metric relating to an operating state that most probably will appear if limiting the transmit power is reverted. For deciding on reverting limiting the transmit power the current value of the performance metric may be compared with the predicted value of the performance metric. Preferably, the method may comprise determining at least one cell specific value of a cell specific performance metric, said cell specific value characterizing the performance of the first cell or the second cell, and wherein the predicted value of one cell is derived in approximation from a load information submitted in relation to predefined thresholds.

In an example of the present invention, the method comprises transmitting a handover request message from the first base station to the second base station and signalling to the second base station a portion of the radio resources on which the first base station is willing to limit the transmit power if the second base station accepts a handover specified by the handover request. This allows for combining the two above described load balancing operations, i.e. triggering a handover and limiting the transmit power.

In an example, the method comprises transmitting a limiting request from the second base station to the first base station for requesting the first base station to limit the transmit power of the signal transmitted over a portion of radio resources.Preferably, the method comprises transmitting a handover request from the first base station to the second base station and receiving a handover rejection from the second base station, the handover rejection indicating whether the second base station cannot accept the requested handover due to insufficient control channel radio condition to the terminal. In an embodiment, the method comprises transmitting a handover request from the first base station to the second base station and limiting the transmit power of the signal transmitted by the first base station over a portion of the radio resources if a handover rejection related to said handover request is received from the second base station. So in one embodiment the method comprises that a handover rejection indicates that the second base station cannot accept the requested handover due to insufficient control channel condition to the terminal. After having received the handover rejection and after having limited the transmit power, the first base station may transmit a further handover request to the second base station. Under normal circumstance, limiting the transmit power should have removed the insufficient control channel condition to the terminal and the second base station should be able to accept the requested handover.

In an example, the method comprises transmitting a limiting request from the second base station to the first base station for requesting the first base station to limit the transmit power of the signal transmitted over a portion of the radio resources. In particular when applying the method in a LTE system, the limiting request may be a muting request for requesting the first base station to insert almost blank subframes (ABS) into the framing structure of LTE.

In an example said evaluating is performed on a single network element, preferably on a base station. For instance, the performance metric may be calculated by the first base station only, with the second base station transmitting values specific to the second cell to the first base station. In particular, the second base station may calculate only the current value of the metric specific to the second cell and transmit this value to the first base station.

According to an example, a network element of a wireless network is provided, said network comprising a first base station having a first cell and at least one second base station having a second cell, the first cell and the second cell at least partially overlapping each other, wherein the network element comprises control means arranged for evaluating an impact of a potential load balancing operation to an overall performance metric, said metric characterizing the performance of the first cell and the at least one second cell, and performing the load balancing operation if said evaluating indicates that the potential load balancing operation would improve the performance according to the performance metric. The control means may comprise, e.g., a processor or micro computer programmed for executing a method according the present invention, embodiments of which are described above.

Preferably, the network element is the first base station or the at least one second base station, the control means of which being arranged for executing a method a method according to the present invention, embodiments of which are described above.

## Brief description of the figures

Preferred examples and further advantages of the present invention are shown in the figures and described in detail hereinafter.

Figure 1    shows a cellular communication network;

figure 2    shows network elements of the cellular network shown in figure 1;

figure 3    shows diagrams of resource allocation in the network shown in figure 1;

figure 4    shows a flow chart of a method for operating a network element of the network shown in figure 1; and

figure 5    shows a sequence chart of signalling messages exchanged between a pico base station and a macro base station of the cellular network shown in figure 1.

## Description of the examples

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

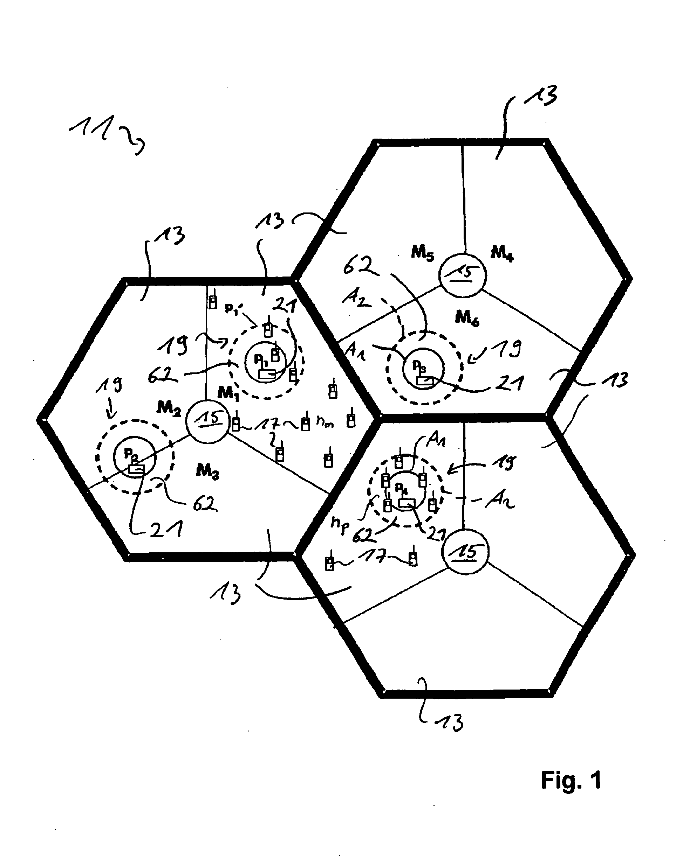

Figure 1 shows a cellular network 11 having multiple macro cells 13. Each macro cell 13 has a macro base station 15 arranged for controlling the macro cell 13, in particular terminals 17 located within that macro cell 13 and registered with the macro base station 15 of that macro cell 13. In the shown example a single macro base station 15 is assigned to three macro cells 13. In another example, only one macro cell 13 is assigned to a macro base station 15.

Furthermore, the cellular network 11 has multiple pico cells 19, each of them having a pico base station 21. In the shown example, each pico base station 21 controls exactly one pico cell 19 and terminals 17 registered with the corresponding pico base station 21. A maximum transmission power of a radio signal transmitted by a pico base station 21 is less than a maximum transmission power of a radio signal sent by the macro base station 15. Consequently, the size of a pico cell 19, i.e., the coverage area of a pico cell, is less than the size of a macro cell 13. The pico cells 19 are overlapping with at least one macro cell 13. A pico base station 21 is preferably located within an area where a density of terminals 17 is comparatively high. At least a part of the terminals 17 located within a pico cell 19 may leave the macro cell 13 and register with the pico base station 21 of the pico cell 19. In this way, installing pico base stations 21 in areas with a high density of terminals 17 helps to improve a quality of service and/or a channel capacity experienced by users of the terminal 17 located in that area having a high terminal density.

The cellular network 11 may be part of a Long Term Evolution (LTE) or Long Term Evolution advanced (LTE advanced) mobile communication system. Both LTE and LTE advanced are specified by the Third Generation Partnership project (3GPP). However, the present invention is not limited to LTE or LTE advanced. In LTE the base stations 13, 15 are referred to as enhanced nodeB (eNodeB). The terminals 17 are often referred to as User Equipment (UE). The invention may be applied in connection with different types of cellular networks or mobile communication systems, too.

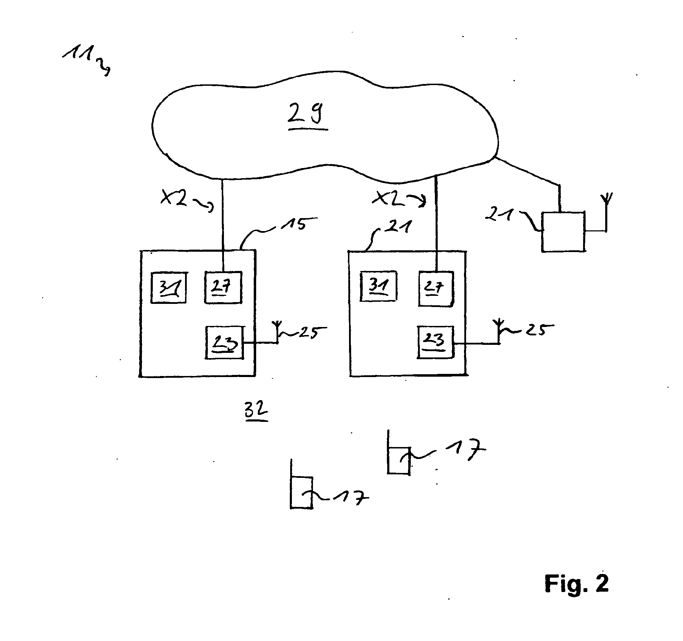

Figure 2 shows network elements of the network 11, such as the macro base station 15 and the pico base station 21 in more detail. Each base station 15, 21 has a transceiver 23 coupled with an antenna 25 for transmitting a radio signal to terminals 17 and for receiving a radio signal sent by the terminals 17.

The base stations 15, 21 have interconnection network interface circuitry 27 connected to interconnection means for interconnecting the base stations 15, 21 to each other, such as an interconnection network 29. When using LTE, the base stations 15, 21 may communicate with each other according to the so-called X2 interface.

Moreover, the base stations 15, 21 comprise control means 31 such as control circuitry preferably comprising a processor programmed for executing a method for operating the base station 15, 21. In particular, the control means 31 may be configured, preferably programmed, for executing a method for deciding on a potential load balancing operation in the wireless network 11. An exemplary method for deciding on the potential load balancing operation is described below.

When operating the network 11 having at least one pico cell 19 located at least partially inside a coverage of the macro cell 13 the overall throughputs of all cells 13, 19 and or the quality of service seen by the terminals 17 shall be maximized. To this end, the network 11 may perform a load balancing operation in order to move load from the macro cell 13 to a pico cell 19 and vice versa.

If the macro cell 13 and a pico cell 19 use the same radio resources, in particular if the same radio carrier is used then time domain inter-cell interference coordination (ICIC) may be used in order to coordinate interference on the control channel. If the cells 13, 19 use both multiple carriers then frequency-domain ICIC may be used in order to coordinate interference on the control channel.

Because the pico base stations 21 have a comparatively small form factor and because of regulatory restrictions the power of a signal emitted by the pico base station 21 is a low compared to the power of a signal emitted by the macro base station 15. Therefore, a coverage area $A_1$ of a pico cell 19 is smaller than the coverage area of a macro cell 13. In case that only a small number of terminals 17 is registered with a pico cell 19 then a possible load balancing operation may consist in decreasing a maximum transmit power used by the macro base station 15 for transmitting a portion of radio transmission resources 32 in order to increase the coverage area of the pico cell 19. Decreasing of the transmit power used by the macro base station 15 in that portion of the radio resources 32 reduces interference between the macro base station 15 and the terminals 17 of the pico base station 21 so that the pico base station 21 may reach terminals 17 that are located rather distant from the pico base station 21. Thus reducing or limiting the maximum transmit power on the portion of the radio resources 32 by the macro base station leads to an increased coverage area $A_2$ (see figure 1) of the pico cell 19. The increase of the coverage area of the pico cell 19 due to reducing the interference by the macro base station is also referred to as "foot print increase". Theoretically, it is also possible to augment the coverage area of the pico cell 19 by increasing the transmit power used by the pico base station 21. However, in many cases, the transmit power of the pico base station 21 is limited by the small form factor of the pico base station 21 or by regulatory restrictions.

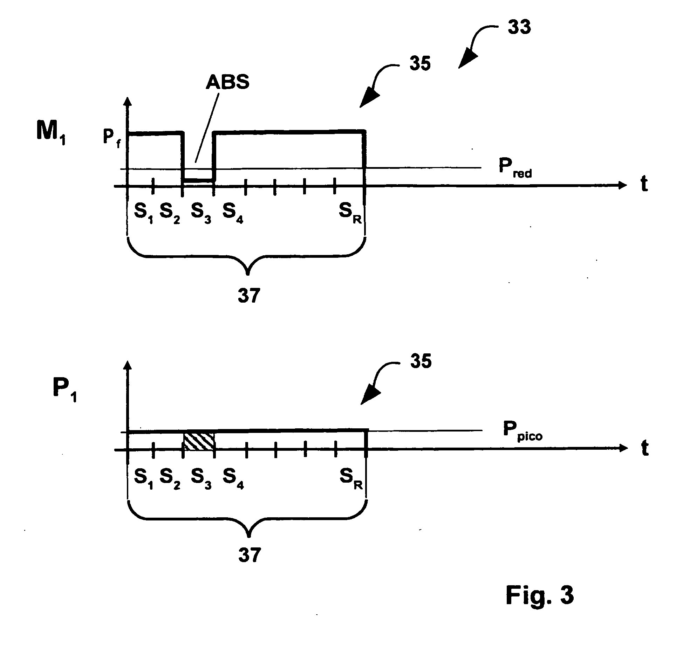

Figure 3 shows a transmit power P of signals emitted by the macro base station 15 of a macro cell $M_1$ and a pico base station 21 of a pico cell $P_1$ over a common time axis. The radio transmission resources 32 comprise a carrier 33 that is used in both cells $M_1$ and $P_1$. The network 11 maintains a framing structure 35. The framing structure 35 comprises subsequent radio frames 37. In figure 3, only one radio frame 37 is shown. Each radio frame 37 is subdivided into multiple subframes $S_1, ... S_R$, with R indicating the total number of subframes within a single radio frame 37. As can been seen in figure 3, the base stations 15, 21 of cells $M_1$ and $P_1$ are synchronized with respect to each other concerning the framing structure 35, in particular the timing of the radio frames 37 and the subframes $S_1, ... S_R$.

As shown in the diagram in the top of figure 3, a subframe $S_3$ with a limited transmission power is inserted into the sequence of subframes $S_1, ... S_R$ of the macro base station 15. When using LTE, the macro base station 15 transmits during this subframe $S_3$ only essential reference symbols. Therefore, only the parts of the subframe $S_3$ allocated for the corresponding reference symbols are used by the macro base station 15, whereas the macro base station 15 does not transmit at all during the remaining parts of that subframe $S_3$. Therefore, the subframe $S_3$ is also referred to as Almost Blank Subframe (ABS).

In another example, the transmit power P of the signal emitted by the macro base station 15 of cell $M_1$ is limited to a reduced power level $P_{red}$ for subframe $S_3$. In another example the macro base station 15 of cell $M_1$ does not transmit at all during the whole subframe $S_3$.

Because the transmit power of the signal emitted by the macro base station 21 of cell $M_1$ is considerably reduced interference with a signal emitted by the pico base station 21 of cell $P_1$ is reduced during subframe $S_3$. Therefore, the pico base station 21 of cell $P_1$ can reach terminals 17 that are relatively distant from that pico base station 21. In other words, the coverage area of the pico cell $P_1$ increases.

Terminal 17 located in the increased coverage area $A_2$ can receive control channel signals emitted by the pico base station 21 (e.g. the Physical Downlink Control Channel, PDCCH of LTE) without experience interference from the macro base station 15 of cell $P_1$ in subframe $S_3$. Furthermore, a data channel (e.g. the Physical Downlink Shared Channel, PDSCH of LTE) of the pico cell $P_1$ in subframe $S_3$ does not experience interference from the macro base station 15 of the cell $P_1$ if a terminal 17 registered with the pico base station 21 resides within the increased coverage area $A_2$. Preferably, the subframe $S_3$ during which a transmit power of the macro base station 15 is reduced is signalled to the terminal 17 in order to avoid problems of channel estimation, channel state measurements and radio/or link failure detection that may occur when inserting ABS into the radio frame 37.

Thus terminals 17 that reside within the increased coverage area $A_2$ but not within the regularly coverage area $A_1$ are preferably scheduled in the subframes that are power restricted by the macro base station 15 because they can then receive the control channel (PDCCH) from the pico base station 21.

In the shown example, the pico base station 21 does not change the transmit power of the signals emitted into the pico cell $P_1$. The transmit power is always $P_{pico}$ for all subframes $S_1, ... S_R$.

In the shown example only one subframe $S_3$ with reduced transmit power is inserted into the radio frame 37. However, multiple subframes with limited transmit power, e.g. ABS, may be inserted into a single radio frame 37.

If the coverage area of the pico cell $P_1$ increases then more terminals 17 may register with the cell $P_1$. As a consequence, load of the macro cell $M_1$ is moved to the pico cell $P_1$. In this sense, limiting the transmit power during a subframe $S_1, ... S_R$ (e.g. inserting an ABS into the radio frame 35) is a load balancing operation.

However, increasing the coverage area of a pico cell 19 does not always improve the performance of the network 11. For example, if there are already many terminals 17 using a single pico cell 19 then adding additional terminals 17 to this pico cell 19 does not improve the overall performance because the pico cell 19 is already heavily loaded. In such a situation some terminals located in the coverage area of the pico cell 19 should remain in the macro cell 13. Thus, inserting the subframe $S_3$ with the limited transmit power is not needed. Moreover, avoiding inserting a subframe $S_3$ with the limited transmit power or removing a previously inserted subframe with limited transmit power increases the performance of the network 11 because the macro base station 15 has more radio transmission resources 32 available for communicating with terminals 17 that are not registered with the pico base station 19. Therefore, in an example of the present invention, the decision on whether to insert a subframe $S_3$ with limited transmit power is taken semi-statically depending on an operating state of the network 11.

A second type of load balancing operation consists in triggering a handover of a communication session of a terminal 17 from one base station 15, 21 to another base station 21, 15. Handovers between the macro base station 15 and the pico base station 21 immediately transfers network load caused by this terminal 17 between the base stations 15, 21.

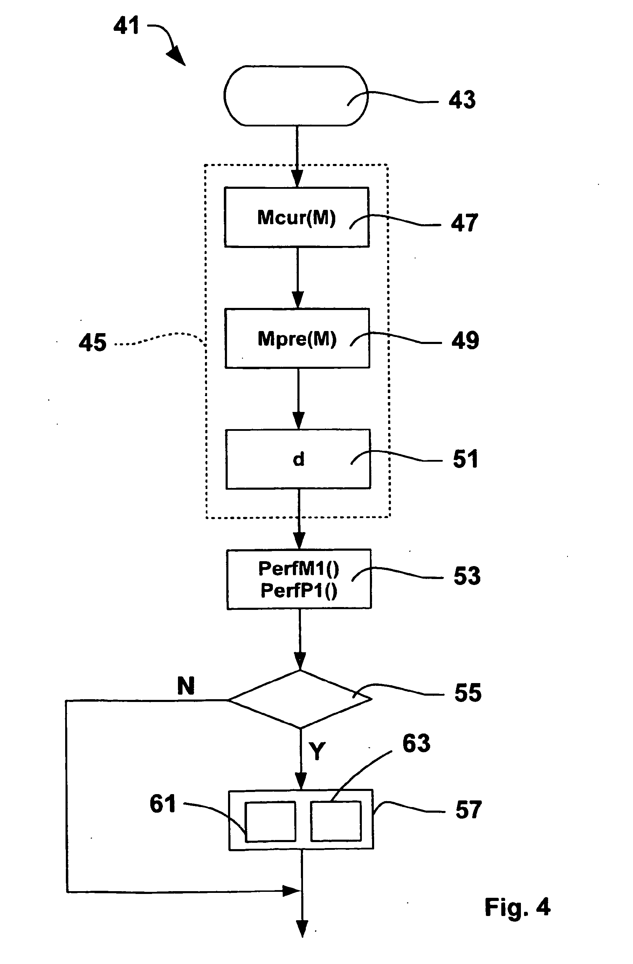

Figure 4 shows a method for semi-statically deciding on whether to perform a load balancing operation, e.g. inserting a subframe with limited transmit power or triggering a handover between the macro cell 13 and the pico cell 19, depending on a current operating state of the network 11, in particular of the macro cell 13 and all pico cells 19 that are located at least partially within that macro cell 13. After a start 43 of the method 41, an impact of a potential load balancing operation on an overall performance metric M characterizing the performance of the macro cell 13 and all pico cells 19 located at least partially within that macro cell 13 is evaluated in block 45.

Block 45 comprises a step 47 of calculating a current value $M_{cur}$ of the performance metric M related to the current operating state of the macro cell 13 and the pico cells 19. Furthermore, the block 45 comprises a step 49 of calculating a predicted value $M_{pre}$ of the performance metric M related to an hypothetical operating state that will appear if the load balancing operation is performed. After steps 47 and 49 a step 51 is executed that compares the current value $M_{cur}$ and the predicted value $M_{pre}$ of the performance metric M and determines whether the load balancing operation would improve the performance characterized by the performance metric M. Step 51 takes a decision d on whether the load balancing operation should be performed.

The method 41 may be executed in a distributed manner. For example, multiple network elements of the network 11, such as the macro base station 15 and the pico base station 21 may execute at least some of the steps shown in figure 4. In order to coordinate the decision on whether the load balancing operation should be performed between these network elements 15, 21, the method 41 may comprise a step 53 that exchanges the values $M_{cur}$, $M_{pre}$ of the performance metric M and/or the decision d taken based on these values $M_{cur}$, $M_{pre}$ with other network elements 15, 21. Then a branch 55 is executed for definitely decide on whether to perform the load balancing operation. Step 55 may decide depending on the decision d and/or a result of the information exchange 53. If step 55 decides that the load balancing operation shall be performed (Y) then the step 57 of the method 41 is executed that triggers or performs the load balancing operation. Otherwise (N) step 57 is skipped and the method 41 is terminated. After step 55 has been executed the method 41 is terminated.

In an example, branch 55 decides to perform the load balancing operation if the decision d indicates that the load balancing operation shall be performed and step 53 shows that the other network elements 15, 21 have taken the same decision d. In another example the network elements 15, 21 carry out the same method on the same input parameters independently and come to the same decision. In further different examples the network elements 15, 21 may negotiate whether the load balancing operation shall be performed in a different way. In yet another example, step 53 is omitted and branch 55 decides depending on the decision d only.

The method 41 may be executed repeatedly or periodically. In an example, the method 41 is executed each time a potential load balancing operation has been determined and a decision on whether to perform this load balancing operation is required.

In a preferred example, the metric M comprises the result of a radio resource management model (RRM model). These performance metrics include at least one of: cell throughput, a minimum throughput of the terminals 17 (e.g. a certain percentile related to the throughput, for instance the fifth percentile), a minimum terminal bit rate in a cell 13, 19, an average or maximum packet delay, or a fairness metric characterizing an overall fairness of radio resource allocation to the individual terminals 17.

The RRM model may use one or more of the following input parameters: number of terminals 17 registered with a cell 13, 19, traffic characteristics (e.g. required bit rates) of the terminals 17, interference experience by the terminals 17, channels of the serving cell 13, 19, path losses between a base station 15, 21 and a terminal 17. In an embodiment, the fact whether a terminal 17 can be reached by a certain base station 15, 21, in particular whether a control channel of that base station 15, 21 can be received by the terminal 17, forms an input parameter of the RRM model.

The RRM model may use a part of the above parameters only. For example, a quite simple RRM model may be provided that models an average terminal throughput.

The load balancing operation 57 may comprise a handover 61 between the macro cell 13 and a pico cell 19. As shown in the equations below the performance metric is evaluated before a handover has taken place (symbol "noHO") and evaluated assuming a handover would take place (symbol "HO").

$$\left. \begin{array}{l} PerfP1(noHO) \;=\; RRMpico(noHO) \\ PerfM1(noHO) \;=\; RRMmacro(noHO) \end{array} \right\} M_{cur}$$

$$\left. \begin{array}{l} PerfP1(HO) \;=\; RRMpico(HO) \\ PerfM1(HO) \;=\; RRMmacro(HO) \end{array} \right\} M_{pre}$$

The situation before the handover is a combined resulting in an the performance indicator $M_{cur}$ and the operating state predicted after the handover is combined resulting in a predicted indicator $M_{pre}$. The handover decision is taken when an overall improvement of the combined performance is achieved, i.e. the handover is performed if $M_{pre} > M_{cur}$.

As shown in the above equations, the values $M_{cur}$ and $M_{pre}$ of the overall performance metric M may be calculated depending on values PerfP1 (), PerfM1 () of cell specific performance metrics. These values may be calculated by using a cell specific radio resource model RRMpico (), RRMmacro (). In a preferred example, the base stations 15, 21 exchange the cell specific values PerfP1 (), PerfM1 () and/or the overall values $M_{cur}$, $M_{pre}$. Step 53 may comprise exchanging the values PerfP1 (), PerfM1 () of the cell specific performance metrics as current and predicted values and/or exchanging values $M_{cur}$ and $M_{pre}$ of the overall performance metric M between the base stations 15, 21. In an example, the macro base station 15 calculates the values PerfM1 () of the cell specific performance metric related to the macro cell M1 and/or the pico base station 21 calculates the values PerfM1 () of the cell specific performance metric related to the pico cell P1. In this case, the macro base station 15 does not need to calculate the values PerfP1 and the pico base station 21 does not need to calculate the values PerfM1.

In an example, the above described predicted evaluation of the operating state after the handover may facilitated by sending information about the designated terminal 17 (e.g. its path loss to the serving cell and or interference cell) to a target base station 15, 21.

The load balancing operation may also comprise limiting (step 63) the transmit power of a signal send by the macro base station 15 on a portion of the radio transmission resources 32. This portion of the transmission resources 32 may correspond to a time interval such as a subframe $S_1$, ... $S_R$. In particular at least one ABS may be inserted into the framing structure 35 as described above.

In one example, the macro base station 15 offers with a handover request message sent to a pico base station 21 to add one or more ABS. The pico base station 21 takes into account this offered ABS in evaluating the performance metrics. Due to an improved performance, in particular control channel performance, in the pico cell 19 due to the offered ABS it is more likely that the handover will be performed.

In another embodiment, the macro base station 21 does not offer with the handover request message to insert an ABS into the framing structure 45. This could lead to the performance - as indicated by the estimated value of the performance metric - decreasing after the potential handover has been performed such that the handover will not take place. However, the pico base station 21 may send a handover rejection message to the macro base station 15, this message including an indication that the handover rejection is due to insufficient control channel condition to the location of the terminal 17. After having received this handover rejection message the macro base station 21 may change the ABS configuration, in particular the macro base station 15 may add an ABS in the framing structure 45 and send a new handover request message to the pico base station 21.

In the above described example and embodiment as result, a handover from the macro base station 15 to the pico base station 21 is combined with limiting the transmit power of the signal send by the macro base station 15 on a portion of the radio transmission resources 42.

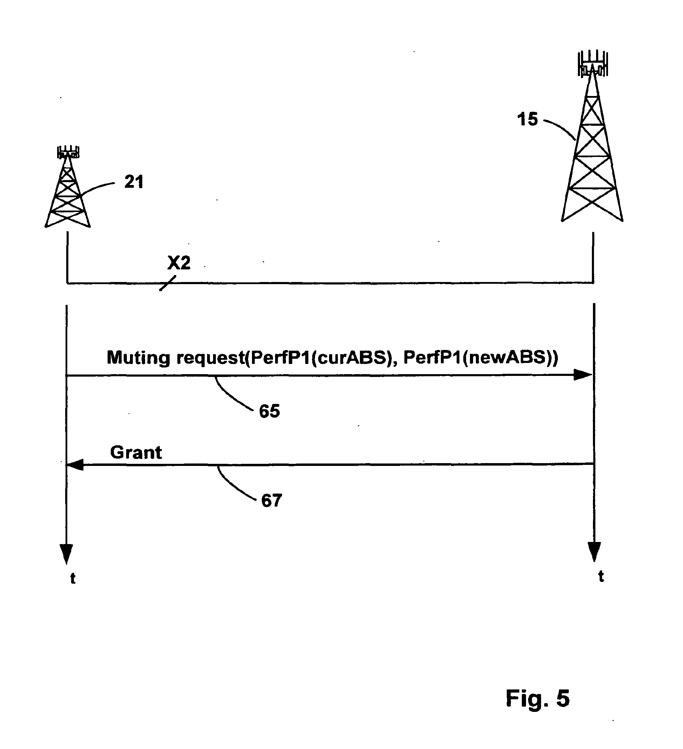

In an example, the pico base station 21 may send a qualified muting request 65 to the macro base station 15 as shown in figure 5. By sending the muting request 65, the pico base station 21 requests adding an ABS in the framing structure 35 of the macro cell 13. The muting request 65 may comprise the current value *PerrP*1(*curABS*) being part of the performance metric $M_{cur}$ or the current value $M_{cur}$ of the overall metric M and the predicted value *PerfP*1(*newABS*) being part of the performance metric $M_{pre}$ or this metric $M_{pre}$ itself. The predicted value *PerfP*1(*curABS*) characterizes an estimated performance the pico base station 21 would have if the ABS is inserted. The macro base station 15 receives the muting request 65 or maybe multiple muting requests and evaluates its own performance without the additional ABS and the predicted performance when the ABS is added. By combining the multiple performance metrics into two overall performance metrics $M_{cur}$ and $M_{pre}$ and comparing them the decision to add an ABS is taken. To take this decision, the method 41 may be executed. When the overall performance of multiple cells (one or more pico cells 19 and one macro cell 13) is estimated to be improved then the additional ABS is set, otherwise it is not.

The following equations show how the values $M_{cur}$ and $M_{pre}$ of the overall performance metric M are calculated:

$$\left.\begin{array}{l} PerfP1(curABS) = RRMpico(curABS) \\ PerfM1(curABS) = RRMmacro(curABS) \end{array}\right\} M_{cur}$$

$$\left.\begin{array}{l} PerfP1(newABS) = RRMpico(newABS) \\ PerfM1(newABS) = RRMmacro(newABS) \end{array}\right\} M_{pre}$$

The operating state curABS before the additional ABS is inserted into the framing structure 35 is evaluated by the current value $M_{cur}$. The operating state newABS predicted after a potential insertion of an additional ABS is evaluated by the predicted value $M_{pre}$. The final decision on whether to insert the ABS is taken if an overall improvement of a overall performance is expected to be achieved. As shown in the equation above, values PerfP1 (), PerfM1 () of cell specific performance metrics determined based on cell specific radio resource models may be calculated. The values $M_{cur}$, $M_{pre}$ of the overall performance metric M may be determined depending on the cell specific values PerfP1 (), PerfM1 (). In an embodiment the values PerfP1, PerfM1, $M_{cur}$ and/or $M_{pre}$ may be exchanged between the base stations 15, 21 as described above in connection with evaluating a possible handover.

The load balancing operation of inserting an ABS (step 63) may be automatically reverted. To this end, the macro base station 15 and/or the pico base station 21 may recalculate the overall performance metric in order to evaluate whether removing the ABS would increase the performance of the network 11. Again, the base stations 15, 21 may exchange the values PerfP1, PerfM1, $M_{cur}$ and/or $M_{pre}$ as described above in connection with evaluating a possible reverting of the ABS setting.

In an example, the decision process of removing the ABS may be initiated by the macro base station 15 by requesting load information from at least one pico base station 21. Preferably, the macro base station 21 indicates to the pico base station 21 which ABS is intended to be declared to a normal (non-ABS) subframe. Furthermore, the macro base station 15 may request the cell specific performance metric or overall performance metric related to the current operating state and a predicted performance metric under the assumption that one ABS is removed from the framing structure 35.

Moreover, the macro base station 15 calculates the current and the predicted performance metrics related to the macro cell 13 and determines an overall performance, i.e., the values $M_{cur}$ and Mpre. The values $M_{cur}$ and $M_{pre}$ may be determined as descried above, e.g., depending on cell specific values PerfM1, PerfP1. If comparing the values $M_{cur}$ and $M_{pre}$ shows that removing an ABS would improve the overall performance then the ABS is reverted to a normal subframe, otherwise not.

In an example, handover decisions and decisions concerning adding or removing an ABS are taken independently from each other. In this embodiment, the macro base station 21 may have determined a fixed set of subframes during which the macro base station 21 uses a limited transmit power, e.g. by treating these subframes as ABS. Thus, a handover of a terminal 17 registered with the macro base station 15 in a cell border region (region $A_2$ except region $A_1$) is always possible since the terminal 17 can be reached by the pico base station 21 through a control channel in one of the subframes during which the transmit power of the macro base station 15 is limited (e.g. during the ABS). If the load in one of the pico cells 19 increases further then the pico base station 21 may request at least one further ABS from the macro base station 21 by sending a qualified muting request (see figure 5).

In another example, no fixed set of subframes during which the transmit power of the macro base station 15 is limited, such as ABS, is configured. In this case, a handover request for a terminal 17 registered with the macro base station 15 and located in the cell border region of a pico cell 19 will fail because the pico base station 21 cannot communicate to this terminal 17 located too far away from the pico base station 21. In this example, the handover rejection message send by the pico base station 21 back to the macro base 15 station may comprise the indication that the handover is rejected because of an insufficient control channel condition to the terminal due to a missing resource restriction by ABS in the macro cell 19. After having received this indication, the macro base station 15 may add at least one ABS into its framing structure 35 and request the handover again.

Regarding the performance criteria for the handover decision or the limiting of the transmit power, the minimum terminal bit rate of a cell may be used. For example, if the minimum of the two minimum bit rates of the pico cell 19 and the macro cell 13 is estimated to be increased if the handover is performed then the handover takes place, otherwise is does not take place.

In an embodiment, the evaluation 45 is performed by a single network element, e.g., the macro base station 15 or one of the pico base stations 21. At least one base station 15, 21 may signal a parameter characterizing a load value, preferably load in the extended coverage region ($A_2$ except region $A_1$), depending on a load of the cell 13, 19 controlled by this base station 15, 21 to said single network element. This parameter can be used to derive the current and predicted performance value preferably of the pico cell 19 assuming a potentially changed ABS setting by the macro base station 15. This parameter may be conveyed in a muting request. This allows that the receiving side can use its current and predicted performance metrics to put into the evaluation and take the decision based on this information. The load value may also correspond to a number $n_p$ of terminals 17 in the extended coverage region ($A_2$ except region $A_1$) or the number of terminals $n_p$, $n_m$ registered with the cell 13, 19. In an embodiment, the parameter characterizing the load is quantized in relation to predefined load thresholds and can have one of a few discrete values only, such that the parameter can be represented by a set of 1 bit, 2 bits, 3 bits, 4 bits, or even more bits. This bitset can easily be integrated into the muting request.

In general, the radio resource management model (RRM model) estimates the performance of the network 11, a group of cells (e.g. a macro cell 13 and the pico cells 19 located at least partially within that macro cell 13), or a single cell 13, 19 by evaluating parameters that can be easily obtained, e.g., by measurement procedures or acquisition of an operating state of a network element such as the base stations 15, 21 or the terminal 17.

In the following, two exemplary RRM models are described. A first RRM model allows for calculating a performance metric for a handover decision where some subframes in the macro cell have a limited transmit power (e.g. ABS).

In a simplified approximation, performance metrics for handover decision for a Pico cell can be expressed by the following equation (with round robin assumption). The Pico cell throughput (under the assumption that an incoming or outgoing terminal is served in the subframes with limited transmit power) can be approximated as follows.

$$RRM\_pico(xHO) = \frac{(MSF / 10) * N_{RB}}{NPMUE + x} \sum_{b=1}^{NPMUE+x} Th(SIR(PMUE_b)) + \frac{(NSF / 10) * N_{RB}}{NPNUE} \sum_{b=1}^{NPNUE} Th(SIR(PNUE_b))$$

RRM_Pico (xHO) gives the throughput of the Pico cell. It is assumed that the available resources in the subframes with limited transmit power are equally distributed among the PMUEs which have to be served in the subframes with limited transmit power because they are located in the overlapping region (region $A_2$ except region $A_1$) and the available resources in the normal subframes are equally distributed among the PNUEs which can be served in the normal subframes because they are located in the center region of a Pico cell (region $A_1$ in Figure 1).

Evaluation of performance metrics for handover decision for a macro cell can be expressed by the following equation.

$$RRM\_Macro(xHO) = \frac{(NSF / 10) * N_{RB}}{NMUE - x} \sum_{b=1}^{NMUE-x} Th(SIR(MUE_b))$$

RRM_Macro (xHO) gives the throughput of the macro cell averaged over a radio frame. It is assumed that the available resources in the normal subframes are equally distributed among the MUEs because they can only be served in the normal subframes.

The meaning of the symbols used in the above equations is as follows.

$$xHO = \begin{cases} no\ HO; & when\ no\ handover\ is\ assumed \\ with\ HO; & when\ handover\ is\ assumed \end{cases}$$

$$x = \begin{cases} 0; & when\ no\ handover\ is\ assumed \\ 1; & when\ handover\ from\ macro\ to\ pico\ is\ assumed \\ -1; & when\ handover\ from\ pico\ to\ macro\ is\ assumed \end{cases}$$

| | |
|---|---|
| $N_{RB}$ | number of available physical resource blocks (PRB) for a given frequency band |
| MSF | number of muted (almost blank) subframes per radio frame(10 subframes) |
| NSF | number of normal subframes per radio frame (10 subframes) |
| NPMUE | number of Pico UEs served in muted subframes per radio frame |
| NPNUE | number of Pico UEs served in normal subframes per radio frame |
| NMUE | number of Macro UEs served in the Macro base station (served in normal subframes) |
| $Th(SIR(PUE_b))$ | throughput (in bits/s) from one PRB for $UE_b$ (spectral efficiency of $UE_b$) |

The same method with these simplifications can be applied to obtain e.g. the minimum terminal bitrate in a cell and take this as *RRM_pico(xHO)*.

In the following, an example for performance metrics for additional ABS setting is given when some subframes are muted in the Macro cell (i.e. some subframes are ABS). In a simplified approximation, performance metrics for additional ABS setting decision for a pico cell can be expressed by the following equation (with round robin assumption).

$$RRM\_pico(xABS) = \frac{[(MSF + m)/10] * N_{RB}}{NPMUE} \sum_{b=1}^{NPMUE} Th(SIR(PMUE_b)) + \frac{[(NSF - m)/10] * N_{RB}}{NPNUE} \sum_{b=1}^{NPNUE} Th(SIR(PNUE_b))$$

RRM_Pico(xABS) gives the throughput of the Pico cell. It has to be noted that the number *NPMUE* and *NPNUE* of UEs classified in muted or normal subframes can also depend on the muted subframe setting m.

Evaluation of performance metrics for additional ABS setting for a Macro cell can be simplified expressed by the following equation.

$$RRM\_Macro(xABS) = \frac{[(NSF - m)/10] * N_{RB}}{NMUE} \sum_{b=1}^{NMUE} Th(SIR(MUE_b))$$

RRM_Macro(xABS) gives the throughput of the macro cell averaged over a radio frame.

The additional symbols used in these equations have the following meaning.

$$xABS = \begin{cases} currABS; & \text{when ABS settigs not modified} \\ newABS; & \text{when ABS settigs modified} \end{cases}$$

$$m = \begin{cases} 0; & \text{when ABS settigs not modified} \\ 1; & \text{when number of ABS increased by 1} \\ -1; & \text{when number of ABS decreased by 1} \end{cases}$$

The same approach with these simplifications can be applied to come e.g. to the minimum terminal bitrate in the cells and take this as performance indication to derive the ABS setting decision from.

To sum up, the examples of the present invention allow for improving the overall performance of a wireless network, in particular a set of radio cells comprising a macro cell 13 and at least one pico cell 19 overlapping at least partially with that macro cell 13. To this end examples of the present invention perform decisions on restricting resource usage by the macro base station 15, in particular limiting a transmit power of a portion of a radio transmission resources 32 including inserting ABS in the framing structure 35 of the macro cell 13. Furthermore, decisions on reverting these restrictions.may be performed. Moreover, handover decisions concerning handovers of terminals 17 from the macro base station 15 to a pico base station 21 may be taken either if the control channel of the macro base station 15 cannot longer reach the terminal 17 or in order to off load traffic to the pico base station 21. In addition, decision related to handovers of terminal 17 from the pico base station 21 to the macro base station 13 may be performed. These decisions may be taken if the terminal 17 can no longer be reached by the control channel transmitted by the pico base station 21. A handover from a pico base station 21 to the macro base station 15 may also be determined to be necessary if the traffic in the pico cell 13 has increased and the traffic should be off loaded to the macro cell 13. By these decisions, the quality of service for the terminal 17, e.g. a minimum terminal bit rate in the system or the overall throughput of both the macro cell and the at least one pico cell 19, or another quality criteria, shall be improved.

The functions of the various elements shown in the Figures, including any functional blocks labeled as 'processors' or 'control means 31', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown. A person of skill in the art would readily recognize that steps of various above-described methods can be performed by programmed computers. Herein, some examples are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The examples are also intended to cover computers programmed to perform said steps of the above-described methods.

## Claims

1. Method (41) for deciding on a potential load balancing operation (57) in a wireless network (11) comprising a first base station (15) having a first cell (13) and at least one second base station (21) having a second cell (19), the first cell (13) and the second cell (19) at least partially overlapping each other, wherein the method (41) comprises evaluating (45) an impact of the potential load balancing operation (57) to an overall performance metric (M), said metric (M) characterizing the performance of the first cell (13) and the at least one second cell (19), and performing the load balancing operation (57) if said evaluating indicates that the potential load balancing operation (57) would improve the performance according to the performance metric (M), **characterized in that** performing the load balancing operation comprises triggering an handover (61) of a terminal (17) from the first cell (13) to the second cell (19) or from the second cell (19) to the first cell (13), and **in that** the load balancing operation (57) comprises transmitting a handover request from the first base station (15) to the second base station (21) and receiving a handover rejection from the second base station (21), the handover rejection indicating whether the second base station cannot accept the requested handover due to insufficient control channel radio condition to the terminal (17).

2. Method of claim 1 wherein the network is a cellular network (11), the first cell being a macro cell (13) and the second cell being a pico cell (19), a coverage area of the pico cell (19) being smaller than a coverage area of the macro cell (13), and wherein the fist base station is a macro base station (15) controlling the macro cell (13) and the second base station is a pico base station (21) controlling the pico cell (19).

3. Method (41) of claim 1 or 2, wherein said evaluating (45) comprises calculating (47) a current value ($M_{cur}$) of the performance metric (M) related to a current operating state of the first cell (13) and the at least one second cell (19) and calculating a predicted value ($M_{pre}$) of the performance metric (M) related to an operating state of the first cell (13) and the at least one second cell (19) that would appear if the load balancing operation (57) would be performed.

4. Method according to one of the preceding claims wherein the values ($M_{cur}$, $M_{pre}$) of performance metric (M) are determined based on a radio resource management model, the performance metric preferably comprising a minimum terminal bitrate.

5. Method (41) according to one of the preceding claims, wherein the method (41) comprises determining at least one cell specific value (PerfM1, PerfP1) of a cell specific performance metric, said cell specific value (PerfM1, PerfP1) characterizing the performance of the first cell (13) or the second cell (19), and determining the current value ($M_{cur}$) and/or the predicted value ($M_{pre}$) depending on the current value and predicted values of the at least one cell specific performance metric (PerfM1, PerfP1).

6. Method (41) according to one of the precedent claims, wherein the method (41) comprises exchanging (53) with network elements (15, 21), preferably with the first base station (15) and/or the second base station (21), the cell specific values (PerfM1, PerfP1) as current and predicted values, and/or the values ($M_{cur}$, $M_{pre}$) of the overall performance metric, and/or an indication (d) on whether said evaluating (45) indicates that the potential load balancing operation (57) would improve the performance according to the performance metric (M).

7. Method (41) according to claim 1, wherein the method (41) comprises transmitting to a handover target base station (15, 21) at least one parameter characterizing radio conditions related to the terminal (17), preferably a pathloss between the terminal (17) and at least one base station (15, 21).

8. Method (41) according to one of the precedent claims, wherein performing the load balancing operation (57) comprises limiting (63) a transmit power of a signal transmitted by the first base station (15) over a portion of radio resources (32) of the first cell (13) and the second cell (19), said portion preferably corresponding to a time interval, preferably a frame or a subframe ($S_3$) of a framing structure (35) of the wireless network, or a portion of the frame or the subframe ($S_3$) .

9. Method (41) according to claim 8, wherein the method comprises reverting said limiting the transmit power and evaluating an impact of reverting limiting (63) the transmit power to the overall performance metric (M) and reverting said limiting (63) if said evaluating indicates that said reverting would improve the performance according to the performance metric.

10. Method (41) according to one of claims 5 to 9, wherein the method comprises determining at least one cell specific value (PerfM1, PerfP1) of a cell specific performance metric, said cell specific value (PerfM1, PerfP1) characterizing the performance of the first cell (13) or the second cell (19), and wherein the predicted value of one cell is derived in approximation from a load information submitted in relation to predefined thresholds.

11. Method (41) according to one of claims 1 to 10, wherein the load balancing operation comprises transmitting a handover request message from the first base station (15) to the second base station (21) and signalling to the second base station (21) a portion ($S_3$) of the radio resources (32) on which the first base station (15) is willing to limit the transmit power.

12. Method according to claim 1, wherein the method (41) comprises transmitting a limiting request from the second base station (21) to the first base station (15) for requesting the first base station (15) to limit (63) the transmit power of the signal transmitted over a portion ($S_3$) of radio resources (32).

13. Network element (15, 21) for a wireless network (11), said network (11) comprising a first base station (15) having a first cell (13) and at least one second base station (21) having a second cell (19), the first cell (13) and the second cell (19) at least partially overlapping each other, wherein the network element (15, 21) comprises control means (31) arranged for evaluating (45) an impact of a potential load balancing operation (57) to an overall performance metric (M), said metric (M) characterizing the performance of the first cell (13) and the at least one second cell (19), and performing the load balancing operation (57) if said evaluating (45) indicates that the potential load balancing operation (57) would improve the performance according to the performance metric (M), **characterized in that** performing the load balancing operation comprises triggering an handover (61) of a terminal (17) from the first cell (13) to the second cell (19) or from the second cell (19) to the first cell (13), and **in that** the control means (31) are arranged for transmitting a handover request from the first base station (15) to the second base station (21) and receiving a handover rejection from the second base station (21), the handover rejection indicating whether the second base station cannot accept the requested handover due to insufficient control channel radio condition to the terminal (17).

14. Network element of claim 13, wherein the network element is the first base station (15) or the at least one second base station (21), the control means (31) of which being arranged for executing a method (41) according to one of claims 2 to 12.

**Patentansprüche**

1. Verfahren (41) zum Entscheiden über eine mögliche Lastausgleichsoperation (57) In einem drahtlosen Netzwerk (11), welches eine erste Basisstation (15) mit einer ersten Zelle (13) und mindestens eine zweite Basisstation (21) mit einer zweiten Zelle (19) umfasst, wobei sich die erste Zelle (13) und die zweite Zelle (19) zumindest teilweise überlappen, wobei das Verfahren (41) das Bewerten (45) einer Auswirkung der möglichen Lastausgleichsoperation (57) auf eine Gesamtleistungsmetrik (M), wobei die besagte Metrik (M) die Leistung der ersten Zelle (13) und der mindestens einen zweiten Zelle (19) kennzeichnet, sowie das Ausführen der Lastausgleichsoperation (57), wenn die besagte Bewertung ergibt, dass die mögliche Lastausgleichsoperation (57) die Leistung gemäß der Leistungsmetrik (M) verbessern würde, umfasst, **dadurch gekennzeichnet, dass** das Ausführen der Lastausgleichsoperation das Auslösen eines Handovers (61) eines Endgeräts (17) von der ersten Zelle (13) an die zweite Zelle (19) oder von der zweiten Zelle (19) an die erste Zelle (13) umfasst, und dass die Lastausgleichsoperation (57) die Übertragung einer Handover-Anforderung von der ersten Basisstation (15) an die zweite Basisstation (21) und den Empfang einer Handover-Verweigerung von der zweiten Basisstation (21) umfasst, wobei die Handover-Verweigerung dem Endgerät (17) anzeigt, ob die zweite Basisstation den angeforderten Handover aufgrund einer unzureichenden Funkbedingung des Steuerkanals nicht akzeptieren kann.

2. Verfahren nach Anspruch 1, wobei das Netzwerk ein zellulares Netzwerk (11) ist, wobei die erste Zelle eine Makrozelle (13) und die zweite Zelle eine Picozelle (19) Ist, wobei ein Abdeckungsbereich der Picozelle (19) kleiner ist als ein Abdeckungsbereich der Makrozelle (13), und wobei die erste Basisstation eine Makro-Basisstation (15) ist, welche die Makrozelle (13) steuert, und die zweite Basisstation eine Pico-Basisstation (21) ist, welche die Picozelle (19) steuert.

3. Verfahren (41) nach Anspruch 1 oder 2, wobei das besagte Bewerten (45) das Berechnen (47) eines aktuellen Wertes ($M_{cur}$) der Leistungsmetrik (M) in Bezug auf einen aktuellen Betriebszustand der ersten Zelle (13) und der mindestens einen zweiten Zelle (19) und das Berechnen eines Prognosewertes ($M_{pre}$) der Leistungsmetrik (M) in Bezug auf einen Betriebszustand der ersten Zelle (13) und der mindestens einen zweiten Zelle (19), der eintreten würde, wenn die Lastausglelchsoperation (57) erfolgen würde, umfasst.

4. Verfahren nach einem der vorstehenden Ansprüche, wobei die Werte ($M_{our}$, $M_{pre}$) der Leistungsmetrik (M) auf der Basis eines Funkressourcenvenrvaltungsmodells ermittelt werden, wobei die Leistungsmetrik vorzugsweise eine Mindestbitrate des Endgeräts umfasst.

5. Verfahren (41) nach einem der vorstehenden Ansprüche, wobei das Verfahren (41) das Ermitteln mindestens eines zellspezifischen Wertes (PerfM1, PerfP1) einer zellspezifischen Leistungsmetrik, wobei der besagte zellspezifische Wert (PerfM1, PerfP1) die Leistung der ersten Zelle (13) oder der zweiten Zelle (19) kennzeichnet, sowie das Ermitteln des aktuellen Wertes ($M_{our}$) und/oder des Prognosewertes ($M_{pre}$) in Abhängigkeit von dem aktuellen Wert und von den Prognosewerten der mindestens einen zellspezifischen Leistungsmetrik (PerfM1, PerfP1) umfasst.

6. Verfahren (41) nach einem der vorstehenden Ansprüche, wobei das Verfahren (41) das Austauschen (53) der zellspezifischen Werte (PerfM1, PerfP1) als aktuelle und Prognosewerte, und/oder der Werte ($M_{oun}$" $M_{pre}$) der Gesamtleistungsmetrik, und/oder einer Angabe (d) darüber, ob die besagte Bewertung (45) ergibt, dass die mögliche Lastausgleichsoperation (57) die Leistung gemäß der Leistungsmetrik (M) verbessern würde, mit Netzwerkelementen (15, 21), vorzugsweise mit der ersten Basisstation (15) und/oder der zweiten Basisstation (21), umfasst.

7. Verfahren (41) nach Anspruch 1, wobei das Verfahren (41) das Übertragen mindestens eines Parameters, welcher auf ein Endgerät (17) bezogene Funkbedingungen, vorzugsweise einen Pfadverlust zwischen dem Endgerät (17) und mindestens einer Basisstation (15, 21), kennzeichnet, an eine Handover-Zielbasisstation (15, 21) umfasst.

8. Verfahren (41) nach einem der vorstehenden Ansprüche, wobei das Ausführen der Lastausgleichsoperation (57) das Begrenzen (63) einer Sendeleistung eines von der ersten Basisstation (15) über einen Teil von Funkressourcen (32) der ersten Zelle (13) und der zweiten Zelle (19) übertragenen Signals umfasst, wobei der besagte erste Teil einem Zeitintervall, vorzugsweise einem Rahmen oder einem Tellrahmen ($S_3$) einer Rahmenstruktur (35) des drahtlosen Netzwerks, oder einem Teil des Rahmens oder des Teilrahmens (S3) entspricht.

9. Verfahren (41) nach Anspruch 8, wobei das Verfahren das Zurücksetzen der besagten Begrenzung der Sendeleistung und das Bewerten einer Auswirkung des Zurücksetzens der Begrenzung (63) der Sendeleistung auf die Gesamtleistungsmetrik (M) und das Zurücksetzen der besagten Begrenzung (63), wenn die besagte Bewertung ergibt, dass das besagte Zurücksetzen die Leistung gemäß der Leistungsmetrik verbessern würde, umfasst.

10. Verfahren (41) nach einem der Ansprüche 5 bis 9, wobei das Verfahren das Ermitteln mindestens eines zellspezifischen Wertes (PorfM1, ParfP1) einer zelispezifischen Leistungsmetrik umfasst, wobei der besagte zellspezifische Wert (PartM1, PerfP1) die Leistung der ersten Zelle (13) oder der zweiten Zelle (19) kennzeichnet, und wobei der Prognosewert einer Zelle annähernd von einer in Bezug auf vordefinierte Grenzwerte übermittelten Lastinformation abgeleitet wird.

11. Verfahren (41) nach einem der Ansprüche 1 bis 10, wobei die Lastausgleichsoperation die Übertragung einer Handover-Anforderungsnachricht von der ersten Basisstation (15) an die zweite Basisstation (21) und die Signalisierung eines Teils ($S_3$) der Funkressourcen (32), auf welchen die Basisstation (15) bereit ist, die Sendeleistung zu begrenzen, an die zweite Basisstation (21) umfasst.

12. Verfahren nach Anspruch 1, wobei das Verfahren (41) das Übertragen einer Begrenzungsanforderung von der zweiten Basisstation (21) an die erste Basisstation (15) umfasst, um die erste Basisstation (15) aufzufordern, die Sendeleistung des über einen Teil ($S_3$) der Funkressourcen (32) übertragenen Signals zu begrenzen (63).

13. Netzwerkelement (15, 21) für ein drahtloses Netzwerk (11), wobei das besagte Netzwerk (11) eine erste Basisstation (15) mit einer ersten Zelle (13) und mindestens eine zweite Basisstation (21) mit einer zweiten Zelle (19) umfasst, wobei sich die erste Zelle (13) und die zweite Zelle (19) zumindest teilweise überlappen), wobei das Netzwerkelement (15, 21) Steuermittel zum Bewerten (45) einer Auswirkung einer möglichen Lastausgleichsoperation (57) auf eine Gesamtleistungsmetrik (M) und zum Ausführen der Lastausgleichsoperation (57), wenn die besagte Bewertung (45) ergibt, dass die mögliche Lastausgleichsoperation (57) die Leistung gemäß der Leistungsmetrlk (M) verbessern würde, umfasst, **dadurch gekennzeichnet, dass** das Ausführen der Lastausgleichsoperstion das Auslösen eines Handovers (61) eines Endgeräts (17) von der ersten Zelle (13) an die zweite Zelle (19) oder von der zweiten Zelle (19) an die erste Zelle (13) umfasst, und dass die Steuermittel (31) für die Übertragung einer Handover-Anforderung von der ersten Basisstation (15) an die zweite Basisstation (21) und für den Empfang einer Handover-Verweigerung von der zweiten Basisstation (21) umfasst, wobei die Handover-Verweigerung dem Endgerät (17) anzeigt, ob die zweite Basisstation den angeforderten Handover aufgrund einer unzureichenden Funkbedingung des Steuerkanals nicht akzeptieren kann.

14. Netzwerkelement nach Anspruch 13, wobei das Netzwerkelement die erste Basisstation (15) oder die mindestens eine zweite Basisstation (21) ist, deren Steuermittel (31) für das Durchführen eines Verfahrens (41) gemäß einem der Ansprüche 2 bis 12 ausgelegt sind.

## Revendications

1. Procédé (41) de décision concernant une opération d'équilibrage de charge potentielle (57) dans un réseau sans fil (11) comprenant une première station de base (15) présentant une première cellule (13) et au moins une deuxième station de base (21) présentant une deuxième cellule (19), la première cellule (13) et la deuxième cellule (19) se chevauchant au moins partiellement l'une l'autre, le procédé (41) comprenant l'évaluation (45) d'une influence de l'opération d'équilibrage de charge potentielle (57) sur une métrique de performances globale (M), ladite métrique (M) caractérisant les performances de la première cellule (13) et de l'au moins une deuxième cellule (19), et l'exécution de l'opération d'équilibrage de charge (57) si ladite évaluation indique que l'opération d'équilibrage de charge potentielle (57) améliorerait les performances conformément à la métrique de performances (M), **caractérisé en ce que** l'exécution de l'opération d'équilibrage de charge comprend le déclenchement d'un transfert (61) d'un terminal (17) depuis la première cellule (13) vers la deuxième cellule (19) ou depuis la deuxième cellule (19) vers la première cellule (13), et **en ce que** l'opération d'équilibrage de charge (57) comprend la transmission d'une demande de transfert depuis la première station de base (15) vers la deuxième station de base (21) et la réception d'un rejet de transfert depuis la deuxième station de base (21), le rejet de transfert indiquant si la deuxième station de base ne peut pas accepter le transfert demandé en raison d'une condition radio de canal de commande Insuffisante par rapport au terminal (17).

2. Procédé selon la revendication 1 dans lequel le réseau est un réseau cellulaire (11), la première cellule étant une macro-cellule (13) et la deuxième cellule étant une pico-cellule (19), une zone de couverture de la plco-cellule (19) étant Inférieure à une zone de couverture de la macro-cellule (13), et dans lequel la première station de base est une station de base macro (15) commandant la macro-cellule (13) et la deuxième station de base est une station de base pico (21) commandant la pico-cellule (19).

3. Procédé (41) selon la revendication 1 ou 2, dans lequel ladite évaluation (45) comprend le calcul (47) d'une valeur actuelle ($M_{cur}$) de la métrique de performances (M) par rapport à un état de fonctionnement actuel de la première cellule (13) et de l'au moins une deuxième cellule (19) et le calcul d'une valeur prévue ($M_{pre}$) de la métrique de performances (M) par rapport à un état de fonctionnement de la première cellule (13) et de l'au moins une deuxième cellule (19) qui apparaîtrait si l'opération d'équilibrage de charge (57) était exécutée.

4. Procédé selon l'une des revendications précédentes dans lequel les valeurs ($M_{cur}$ $M_{pre}$) de la métrique de performances (M) sont déterminées sur la base d'un modèle de gestion de ressources radio, la métrique de performances comprenant de préférence un débit binaire terminal minimum.

5. Procédé (41) selon l'une des revendications précédentes, dans lequel le procédé (41) comprend la détermination d'au moins une valeur spécifique à la cellule (PerfM1, PerfP1) d'une métrique de performances spécifique à la cellule, ladite valeur spécifique à la cellule (PerfM1, PerfP1) caractérisant les performances de la première cellule (13) ou de la deuxième cellule (19), et la détermination de la valeur actuelle ($M_{cur}$) et/ou de la valeur prévue ($M_{pre}$) en fonction de la valeur actuelle et des valeurs prévues de l'au moins une métrique de performances spécifique à la cellule (PerfM1, PerfP1).

6. Procédé (41) selon l'une des revendications précédentes, dans lequel le procédé (41) comprend l'échange (53) avec des éléments de réseau (15, 21), de préférence avec la première station de base (15) et/ou la deuxième station de base (21), des valeurs spécifiques à la cellule (PerfM1, PerfP1) comme valeurs actuelles et prévues, et/ou des valeurs ($M_{cur}$, $M_{pre}$) de la métrique de performances globale, et/ou d'une indication (d) sur le fait que ladite évaluation (45) indique que l'opération d'équilibrage de charge potentielle (57) améliorerait les performances conformément à la métrique de performances (M).

7. Procédé (41) selon la revendication 1, dans lequel le procédé (41) comprend la transmission vers une station de base cible de transfert (15, 21) d'au moins un paramètre caractérisant des conditions radio par rapport au terminal (17), de préférence un affaiblissement de propagation entre le terminal (17) et au moins une station de base (15, 21).

8. Procédé (41) selon l'une des revendications précédentes, dans lequel l'exécution de l'opération d'équilibrage de charge (57) comprend la limitation (63) d'une puissance de transmission d'un signal transmis par la première station de base (15) sur une partie de ressources radio (32) de la première cellule (13) et de la deuxième cellule (19), ladite partie correspondant de préférence à un intervalle de temps, de préférence une trame ou une sous-trame ($S_3$) d'une structure de trame (35) du réseau sans fil, ou une partie de la trame ou de la sous-trame ($S_3$)

9. Procédé (41) selon la revendication 8, dans lequel le procédé comprend l'inversion de ladite limitation de la puissance de transmission et l'évaluation d'une influence de l'inversion de limitation (63) de la puissance de transmission sur la métrique de performances globale (M) et l'inversion de ladite limitation (63) si ladite évaluation indique que ladite inversion améliorerait les performances conformément à la métrique de performances.

10. Procédé (41) selon l'une des revendications 5 à 9, dans lequel le procédé comprend la détermination d'au moins une valeur spécifique à la cellule (PerfM1, PerfP1) d'une métrique de performances spécifique à la cellule, ladite valeur spécifique à la cellule (PerfM1, PerfP1) caractérisant les performances de la première cellule (13) ou de la deuxième cellule (19), et dans lequel la valeur prévue d'une cellule est dérivée approximativement d'une information de charge soumise par rapport à des seuils prédéfinis.

11. Procédé (41) selon l'une des revendications 1 à 10, dans lequel l'opération d'équilibrage de charge comprend la transmission d'un message de demande de transfert depuis la première station de base (15) vers la deuxième station de base (21) et la signalisation à la deuxième station de base (21) d'une partie ($S_3$) des ressources radio (32) sur lesquelles la première station de base (15) veut limiter la puissance de transmission.

12. Procédé selon la revendication 1, dans lequel le procédé (41) comprend la transmission d'une demande de limitation depuis la deuxième station de base (21) vers la première station de base (15) pour demander à la première station de base (15) de limiter (63) la puissance de transmission du signal transmis sur une partie ($S_3$) de ressources radio (32).

13. Élément de réseau (15, 21) pour un réseau sans fil (11), ledit réseau (11) comprenant une première station de base (15) présentant une première cellule (13) et au moins une deuxième station de base (21) présentant une deuxième cellule (19), la première cellule (13) et la deuxième cellule (19) se chevauchant au moins partiellement l'une l'autre, l'élément de réseau (15, 21) comprenant des moyens de commande (31) conçus pour évaluer (45) une influence d'une opération d'équilibrage de charge potentielle (57) sur une métrique de performances globale (M), ladite métrique (M) caractérisant les performances de la première cellule (13) et de l'au moins une deuxième cellule (19), et pour exécuter de l'opération d'équilibrage de charge (57) si ladite évaluation (45) indique que l'opération d'équilibrage de charge potentielle (57) améliorerait les performances conformément à la métrique de performances (M), **caractérisé en ce que** l'exécution de l'opération d'équilibrage de charge comprend le déclenchement d'un transfert (61) d'un terminal (17) depuis la première cellule (13) vers la deuxième cellule (19) ou depuis la deuxième cellule (19) vers la première cellule (13), et **en ce que** les moyens de commande (31) sont conçus pour transmettre une demande de transfert depuis la première station de base (15) vers la deuxième station de base (21), le rejet de transfert Indiquant si la deuxième station de base ne peut pas accepter le transfert demandé en raison d'une condition radio de canal de commande insuffisante par rapport au terminal (17).

14. Élément de réseau selon la revendication 13, dans lequel l'élément de réseau est la première station de base (15) ou l'au moins une deuxième station de base (21), dont les moyens de commande (31) sont conçus pour exécuter un procédé (41) conformément aux revendications 2 à 12.

**Fig. 1**

**Fig. 2**

**Fig. 3**

**41**

**43**

**Mcur(M)** — **47**

**45**

**Mpre(M)** — **49**

**d** — **51**

**PerfM1()**
**PerfP1()** — **53**

**N** **55**

**Y**

**63**

**61** **57**

**Fig. 4**

**21**

**15**

**X2**

**Muting request(PerfP1(curABS), PerfP1(newABS))**

**65**

**Grant**

**67**

t

t

**Fig. 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100238884 A1

- EP 2073579 A1

**Non-patent literature cited in the description**

- On TDM eICIC coordination for Macro+Pico Coses. *3GPP R3-102 817*